# EUROPEAN PATENT SPECIFICATION

(11) **EP 0 449 658 B1**
(45) Date of publication and mention of the grant of the patent: **29.01.1997**
(21) Application number: 91302825.4
(22) Date of filing: 28.03.1991
(51) Int. Cl.: G11B 15/675

(54) **Cassette loading arrangement**
Ladevorrichtung für Kassetten
Dispositif de chargement de cassettes

(30) Priority: 30.03.1990 JP 84302/90; 30.03.1990 JP 84303/90
(43) Date of publication of application: 02.10.1991
(73) Proprietor: SONY CORPORATION, Tokyo 141 (JP)
(72) Inventor: Kondo, Yoshio, Shinagawa-ku Tokyo 141 (JP); Fukahori, Kenichi, Shinagawa-ku Tokyo 141 (JP)
(74) Representative: Purvis, William Michael Cameron

(56) References cited:
- EP-A- 0 273 640
- EP-A- 0 356 985
- EP-A- 0 394 975
- WO-A-90/16067
- CH-A- 666 571

## Description

The invention relates to magnetic recording and reproducing devices and, more particularly, to a cassette loading arrangement therefore.

Heretofore, efforts have been made to reduce the size of magnetic recording and reproducing devices, particularly video tape recorders (VTRs), for better portability. To obtain such a reduction in size, it has been customary to reduce the size of the deck mechanism that includes the tape transport system.

Various approaches have been followed in attempting to reduce the size of the deck mechanism and such prior attempts include a reduction in the size of the tape cassettes being used, a reduction in the diameter of the rotary head drum, and a more effective utilization of the dead space present in existing tape cassettes.

The proposal to reduce the size of the tape cassettes requires an adapter or a mechanism for moving the reel supports to cause the distance therebetween to match the smaller, different cassette size, so that compatibility between different cassette sizes is ensured.

In an attempt to utilize the dead space in existing tape cassettes, a rotary head drum and a tape loading mechanism have been partially inserted into the dead space in a tape cassette that has been loaded into magnetic recording and reproducing apparatus.

The use of tape cassettes of reduced size results in a complex operating procedure and a complex operating mechanism, because an adapter must be used or a reel support moving mechanism must be incorporated.

Efforts to reduce the diameter of the rotary head drum are subject to design limitations, because when a standard-size tape cassette is used there is a certain limitation imposed on the transport of the tape by the diameter of the rotary head drum around which the tape is wound.

The utilization of the dead space in existing tape cassettes to receive a portion of the rotary head drum and tape loading mechanism is an effective way to reduce the size of the deck mechanism, however, the extent to which the rotary head drum and the tape loading mechanism can be inserted into a tape cassette is limited by the dead space available. In addition, in such proposed mechanisms, the tape cassette is loaded onto one chassis, and the rotary head drum and the tape loading mechanism are supported on another chassis, the two chassis being movable with respect to each other. These two chassis have respective mating surfaces that bear the chassis, but the mating surfaces require overlapping portions that result in a device of greater than desired width.

More specifically, if the overlapping portions of the mating surfaces are too small then when the chassis are moved relative to each other, the chassis would tend to swing and become unstable and would not move back smoothly, thus preventing the rotary head drum and the tape loading mechanism from being reliably inserted into the tape cassette. In view of this drawback, the overlapping portions of the mating surfaces of the chassis have to be relatively large and, hence, the surface areas of the chassis must also be large. Increasing the surface areas of the chassis, however, results in an increase in the size of other components, presenting an obstacle to the efforts to reduce the size of the magnetic recording and reproducing device.

Furthermore, a conventional VTR tape cassette is loaded in the unit while the lid is held in the raised position against the resiliency of a lid closing spring, and the tape is withdrawn from the opening of the tape cassette, or recording and reproducing heads are inserted into the opening of the tape cassette, so that signals can be recorded on or reproduced from the tape. During the time that the tape is being withdrawn from the cassette housing or the recording and reproducing heads are being inserted in the cassette housing, the tape cassette has to be held in a stable manner in the loaded position. Because the tape cassette is required to be retained in position under retentive forces strong enough to overcome the moment resulting from the resiliency of the lid-closing spring, the cassette loading unit needs a retentive biasing means to guide the tape cassette into the loaded position and retain the tape cassette reliably in the loaded position. As a consequence, the deck mechanism which constitutes the cassette loading unit is complex in structure and large in size.

Patent Specification EP-A-0 356 985 discloses a recording reproduction system having a reel chassis provided with a pair of reel supports slidably mounted on a main chassis having a head cylinder. Upon loading of a tape cassette onto the reel chassis, the reel chassis is moved by powered means to locate the tape of the tape cassette adjacent the reel cylinder.

According to the invention there is provided a cassette loading arrangement for loading a cassette into a recording/reproducing apparatus, comprising:
a tape cassette having tape take-up and supply reels;
a first chassis on which a pair of reel drive spindles are slidably mounted to receive the take-up and supply reels of the tape cassette loaded thereon;
a second chassis having a recording/reproducing head mounted thereon, the second chassis being slidably mounted on the first chassis; and
chassis guide means to provide relative motion between the first chassis and the second chassis;
characterised in that the tape take-up and supply reels are arranged in the tape cassette for movement so as to increase a dead space at a front of the tape cassette; and the chassis guide means provide selective movement of the recording/reproducing head on the second chassis into the increased dead space in the tape cassette and provide movement of the pair of reel drive spindles away from the recording/reproducing head, thereby moving the take-up and supply reels.

The cassette loading arrangement thus may comprise a small-size deck mechanism including a chassis constituting a loading unit for loading a tape cassette and another chassis serving as a support unit for the recording and reproducing heads, the two chassis being movable relative to each other smoothly, reliably, and in a stable manner through a simple arrangement.

A simple and small cassette loading unit for loading a tape cassette therein, can thus be suitable for use with an arrangement which has recording and reproducing heads that are inserted into the tape cassette for recording signals on and reproducing signals from the tape cassette, the lid of the cassette being opened and closed without requiring a separate biased retaining mechanism to hold the cassette and overcome the resiliency of a lid-closing spring of the cassette.

The tape cassette can have a front open side through which recording and reproducing heads can be inserted and a lid that is biased closed, the arrangement including a lid opening and closing mechanism for loading the tape cassette therein which is capable of opening and closing the lid of the tape cassette without relying on downward pressure on the cassette during the loading operation to overcome the force of a lid-closing spring.

When the tape cassette is loaded into the cassette loading unit and held in the loaded position, the lid is opened by the lid opening and closing mechanism, and recording and reproducing heads and a tape loading member are inserted into the tape cassette housing. Therefore, the lid is closed by the lid opening and closing mechanism and the tape is withdrawn from the tape cassette and loaded around the recording and reproducing heads for recording signals on and reproducing signals from the tape.

The invention is diagrammatically illustrated by way of example in the accompanying drawings, in which:
Figure 1 is a perspective view of a cassette loading arrangement of a magnetic recording and reproducing device according to an embodiment of the invention, the arrangement being shown in an open position;
Figure 2 is a perspective view of the cassette loading arrangement of the magnetic recording and reproducing device of Figure 1, shown in the closed position;
Figure 3A to 3F are cross-sectional views showing the manner in which a multiple chassis of the cassette loading arrangement of the magnetic recording and reproducing device of Figure 1 operates;
Figures 4A to 4D are plan views of the device of Figure 1 showing the manner in which tape reel supports are displaced by introduction of a rotary head drum;
Figure 5 is an underneath plan view of a tape cassette with movable tape reels suitable for use with a cassette loading arrangement according to the invention;
Figure 6 is a top plan view in cross-section showing the manner in which the tape cassette of Figure 5 operates;
Figures 7A to 7F are elevational views showing a cassette lid opening mechanism of a cassette loading arrangement according to the invention;
Figure 8A to 8F are elevational views showing another embodiment of a cassette lid opening mechanism;
Figures 9A to 9D are elevational views showing the manner in which a conventional tape cassette lid is opened;
Figure 10 is a perspective view of a portable video camera incorporating a cassette loading arrangement according to the invention;
Figure 11 is a perspective view of the camera of Figure 10 shown in an opened position;
Figure 12 is a perspective view of another portable video camera incorporating a cassette loading arrangement according to the invention; and
Figure 13 is a perspective view of the camera of Figure 12 shown in an opened position.

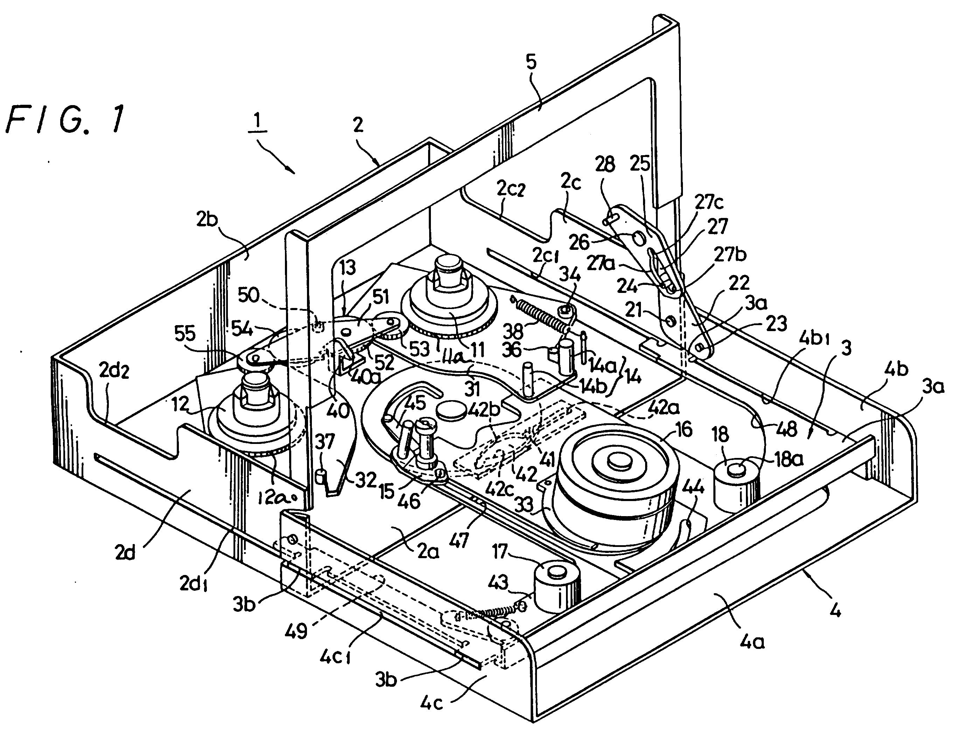

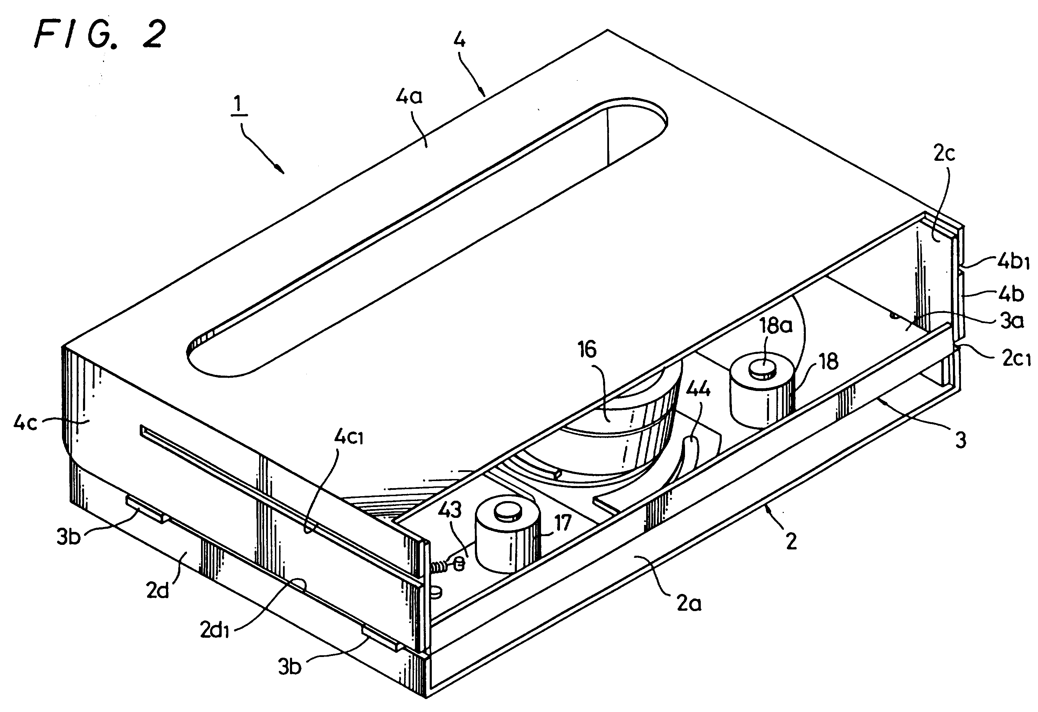

As shown in Figure 1, a magnetic recording and reproducing device having a rotary head, for example an 8mm video tape recorder (VTR), includes a tape deck mechanism 1 comprising a first chassis 2 that is substantially the same size as a standard 8mm tape cassette when viewed in plan. The first chassis 2 is in the form of a casing which is composed of a lower panel 2a, a rear wall panel 2b, and a pair of side wall panels 2c, 2d. A second chassis 3 in the form of a plate is supported on the first chassis 2 and is slidable into and out of the first chassis 2. A third chassis 4, which is substantially the same size as the first chasis 2, is in the form of a lid that is composed of an upper panel 4a and a pair of side wall panels 4b, 4c. The side wall panels 4b, 4c of a third chassis 4 are pivotally coupled at their rear ends to the front ends of the side wall panels 2c, 2d of the first chassis 2, so that the third chassis 4 is angularly movable toward and over the first chassis 2 to close an upper, open side thereof, as shown in Figure 2. The third chassis 4 is also movable away from the first chassis 2 to open the upper, open, side thereof, as shown in Figure 1. When the third chassis 4 is angularly moved away from the first chassis 2 to an orientation where the third and the first chassis 4, 2 are in planar alignment with each other, then the second chassis 3 can slide from the first chassis 2 into the third chassis 4, as shown in Figure 1.

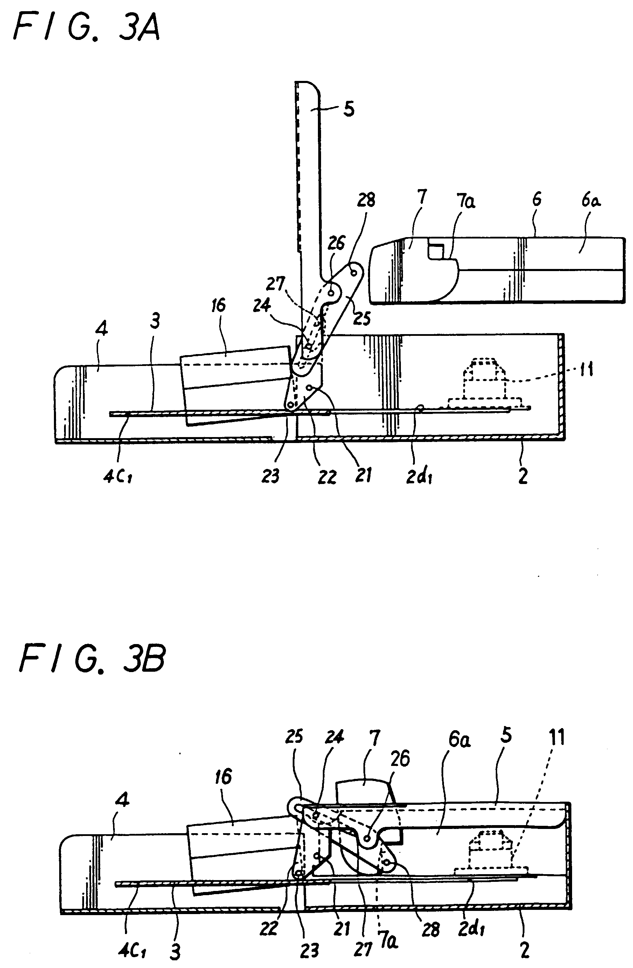

The deck mechanism 1 also includes a cassette presser frame 5 pivotally coupled to the front ends of the side wall panels 2c, 2d, at the front open side of the first chassis 2. The cassette presser frame 5 is angularly movable toward and over the upper open side of the first chassis 2 to hold a tape cassette 6, which is stored in the first chassis 2. This position is shown in Figures 3A, 5, and 6.

To allow the second chassis 3 to slide from the first chassis 2 to the third chassis 4 when the third chassis 4 is angularly moved away from the first chassis 2, the side wall panels 2c, 2d of the first chassis 2 have respective guide slots 2c1, 2d1, formed therein, and the second chassis 3 has pairs of tongues 3a, 3b, projecting from opposite side edges thereof and slidably riding in the respective guide slots 2c1, 2d1. The side wall panels 4b, 4c of the third chassis 4 also have respective guide slots 4b1, 4c1 defined therein that are linearly aligned with the respective guide slots 2c1, 2d1, of the first chassis 2 when the third chassis 4 is angularly moved away from the first chassis 2 into coplanar alignment therewith. Therefore, the second chassis 3 can move from the first chassis 2 to the third chassis 4, by the tongues 3a, 3b sliding along and out of the guide slots 2c1, 2d1 and into the guide slots 4b1, 4c1.

The first chassis 2 houses therein a tape supply reel support 11 and a tape takeup reel support 12, a reel support drive mechanism 13 selectively to drive the supply and takeup reel supports 11, 12, a tape guide post assembly 14 including first and second tape guide posts 14a, 14b, and a tape loading mechanism 15. The second chassis 3 supports thereon a rotary head drum 16 incorporating a drive motor and recording and reproducing heads, not shown, a pinch roller 17, and a tension roller 18.

In regard to the manner in which the third chassis 4 is pivotally attached to the first chassis 2, a first link 22 is angularly movably supported on a shaft 21 attached to the first chassis 2. The first link 22 has one end fixed to the side wall panel 4b of the third chassis 4 by a pin 23, so that the first link 22 is angularly movable in unison with the third chassis 4, and the opposite end of the first link 22 supports an engaging pin 24. A second link 25 is pivotally supported at its central portion on one of the pivoted ends of the cassette presser frame 5 by a shaft 26. The second link 25 has a slot 27 formed in a portion thereof toward one side of the shaft 26, and the engaging pin 24 is movably received in the slot 27. The second link 25 supports a presser pin 28 on an end thereof that is on the other side of the shaft 26 opposite the slot 27.

The slot 27 includes a relief portion 27a in which the engaging pin 24 of the first link 22 slides, as the first link 22 turns in unison with the third chassis 4 when the third chassis 4 is angularly moved away from the first chassis 2, thereby opening the first chassis 2. The slot 27 also includes a disengaging portion 27b from which the engaging pin 24 is released and freed when the third chassis 4 is angularly moved away from the first chassis 2 into coplanar alignment therewith. The slot 27 further includes an engaging portion 27c which is engaged and pushed by the engaging pin 24 when the third chassis 4 is angularly moved towards and over the first chassis 2, thereby closing the first chassis 2.

When the third chassis 4 is angularly moved away from the first chassis 2 into coplanar alignment therewith, thus opening the first chassis 2, and also when the cassette holder frame 5 is raised into a substantially perpendicular position relative to such plane, the second link 25 is rotated into an erect position, so that the presser pin 28 is moved upwardly relative to the first chassis 2, as shown in Figure 3A.

In the operation of this mechanism, a tape cassette 6 is loaded into the first chassis 2, so that the two tape reels, not shown, in a cassette housing 6a of the tape cassette 6 are engaged respectively by the reel supports 11, 12.

Then, as shown in Figure 3B, the cassette presser frame 5 is angularly moved downwardly over the upper open side of the first chassis 2, thereby pressing the loaded tape cassette 6. The second link 25 is also rotated downwardly to cause the presser pin 28 to engage and press downwardly an arm 7a projecting rearwardly from a pivoted portion of a lid 7 of the tape cassette 6. The lid 7 is thus turned upwardly opening the front of the tape cassette 6 and exposing the tape therein. When the cassette presser frame 5 is further angularly moved downwardly so that it completely presses the tape cassette 6 onto the first chassis 2, the second link 25, is caused to be further rotated to enable the presser pin 28 to raise the lid 7 to its fully erected and opened position.

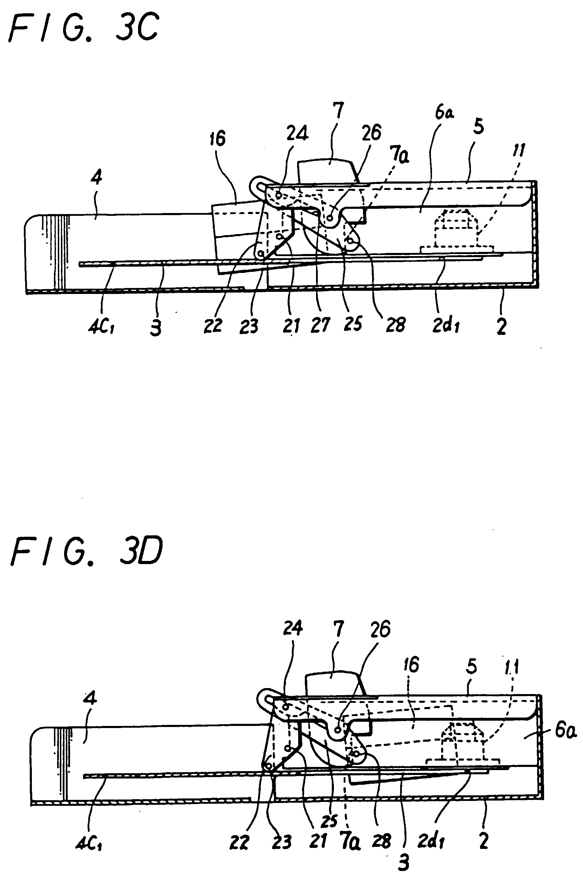

Thereafter, the second chassis 3 is moved from the third chassis 4 toward the first chassis 2, as shown in Figure 3C, to insert the rotary head drum 16, the pinch roller 17, and the tension roller 18 through the opened, front side of the tape cassette 6 into the dead space in the cassette housing 6a of the tape cassette 6 until the second chassis 3 resides entirely within the first chassis 2, as shown in Figure 3D.

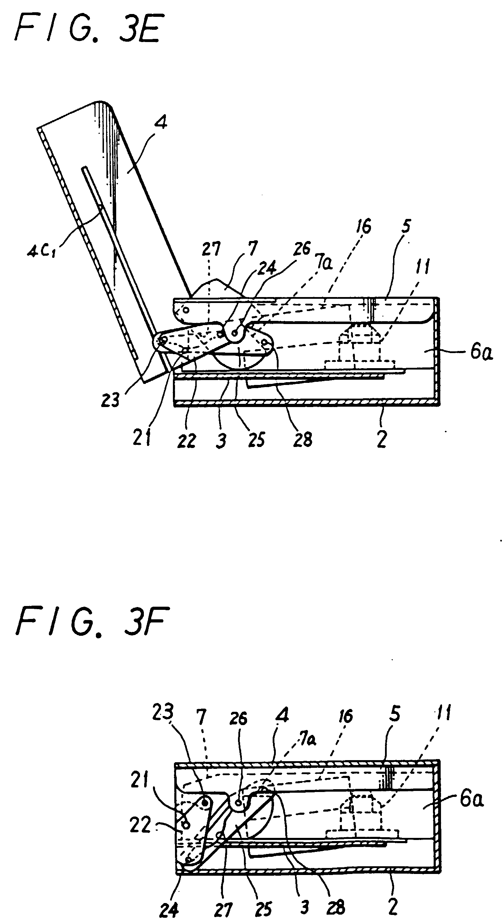

The third chassis 4 is then angularly moved toward and over the first chassis 2 to close the first chassis 2, the first link 22 being rotated in unison with the third chassis 4 and pivoted about the pin 21. The engaging pin 24 on the first link 22 slides into pushing engagement with the engaging portion 27c of the slot 27 of the second link 25, so that the second link 25 is not rotated about the shaft 26 in a direction to elevate presser pin 28 out of pressing engagement with the arm 7a of the tape cassette lid 7. All such tape cassettes employ a spring that biases the lid into a closed position, and the lid 7 thus starts to be automatically closed under the spring bias that normally urges the lid 7 shut, as shown in Figure 3E. When the third chassis 4 is fully closed upon the first chassis 2, the second link 25 has its slot 27 pushed by the first link 22 further to elevate the pin 28, thereby fully releasing the lid 7 and permitting it to close. The lid 7 now fully closes the opened, front side of the tape cassette 6, as shown in Figure 3F. At such time, the tape in tape cassette 6 is loaded around the rotary head drum 16 for recording or playback.

When the third chassis 4 is thereafter angularly moved back to open the first chassis 2, the second link 25 is rotated by the first link 22 to displace the presser pin 28 downwardly. The presser pin 28 presses against the arm 7a of the lid 7 of the tape cassette 6, whereupon the lid 7 starts to open the front of the tape cassette 6. The third chassis 4 is subsequently angularly moved away from the first chassis 2 until the third chassis 4 is positioned in coplanar alignment with the first chassis 2, at which time the lid 7 is in the fully opened position, thus fully opening the front of the tape cassette 6. The second chassis 3 can now slide back out of the first chassis 2 towards the third chassis 4, displacing the rotary head drum 16, the pinch roller 17 and the tension roller 18 from the dead space in the tape cassette 6.

The cassette presser frame 5 is then rotated back into the perpendicular position rotating the second link 25 upwardly in unison therewith so that the arm 7a of the lid 7 is released from the presser pin 28, thereby closing the front of the tape cassette 6 and covering the tape. The closed tape cassette 6 can then be removed from the first chassis 2.

During the above operation, the second chassis 3 is smoothly guided, without any swinging or rocking movement, between the first chassis 2 and the third chassis 4 by the tongues 3a, 3b, of the second chassis 3 sliding along the guide slots 2c1, 2d1 and 4b1, 4c1 that are linearly aligned when the third chassis 4 is fully angularly moved away from the first chassis 2 and is coplanar therewith.

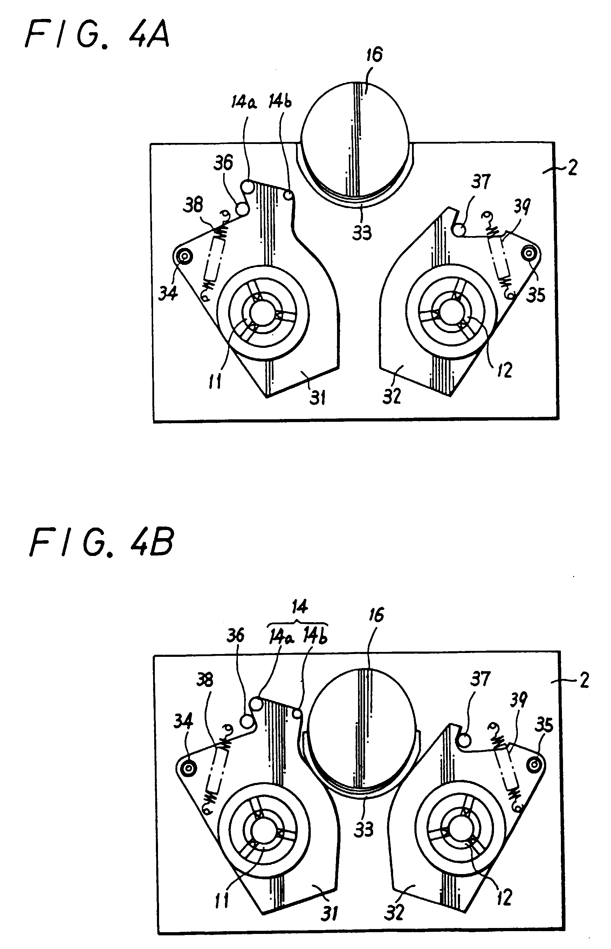

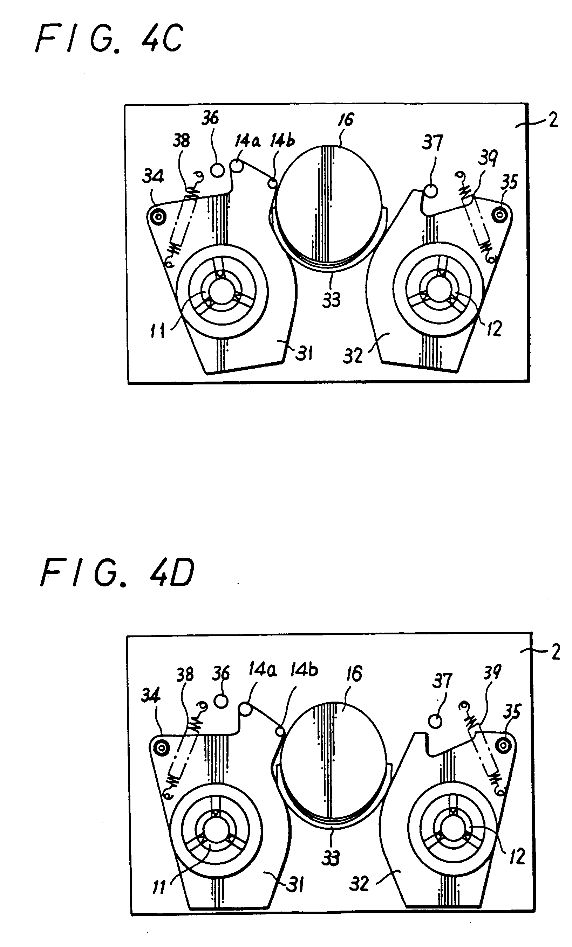

As described above, the rotary head drum 16 is mounted on the second chassis 3 and the supply and takeup reel supports 11, 12 are rotatably mounted respectively on reel support chassis 31, 32, which are mounted on the first chassis 2. As shown in Figures 1 and 4A to 4D, the reel support chassis 31, 32 are mounted side by side and spaced apart on the lower panel 2a of the first chassis 2, so that one will be located at each side of the rotary head drum 16 when it is moved into the first chassis 2. The reel support chassis 31, 32 are positioned on the first chassis 2 at substantially the same height as a head drum base 33 by which the rotary head drum 16 is mounted on the second chassis 3. The reel support chassis 31, 32 are mounted for pivoting movement on the lower panel 2a by respective shafts 34, 35, which are equidistantly spaced from the axes of the reel supports 11, 12, respectively.

The reel support chassis 31, 32 are normally urged to pivot into engagement with respective stopper pins 36, 37 by springs 38, 39, so that the reel supports 11, 12 normally remain spaced apart from each other by a predetermined distance. The first and second tape guide posts 14a, 14b of the tape guide post assembly 14 are spaced apart from each other and are vertically disposed on a front edge of the reel support chassis 31.

With the reel supports 11, 12 and the rotary head drum 16 being thus arranged, when the second chassis 3 is displaced toward the third chassis 4 that has been angularly moved away from the first chassis 2, the rotary head drum 16 is arranged in front of the reel supports 11, 12, as shown in Figures 1 and 4A. When the second chassis 3 is moved into the first chassis 2, the rotary head drum 16 is moved with the second chassis 3 toward the reel supports 11, 12 in the first chassis 2, until an end face of the head drum base 33 abuts against the respective inner end faces of the reel support chassis 31, 32, as shown in Figure 4B. Continued movement of the second chassis 3 into the first chassis 2 causes the head drum base 33 to push the reel support chassis 31, 32 against the bias of the springs 38, 39, so that the reel support chassis 31, 32 are turned about the respective shafts 34, 35, as shown in Figure 4C. When the second chassis 3 is fully moved into the first chassis 2, the two reel support chassis 31, 32 are angularly displaced away from each other toward their limit positions by the head drum base 33, thus increasing the distance between the reel supports 11, 12. The rotary head drum 16 is positioned between the reel supports 11, 12, as shown in Figure 4D.

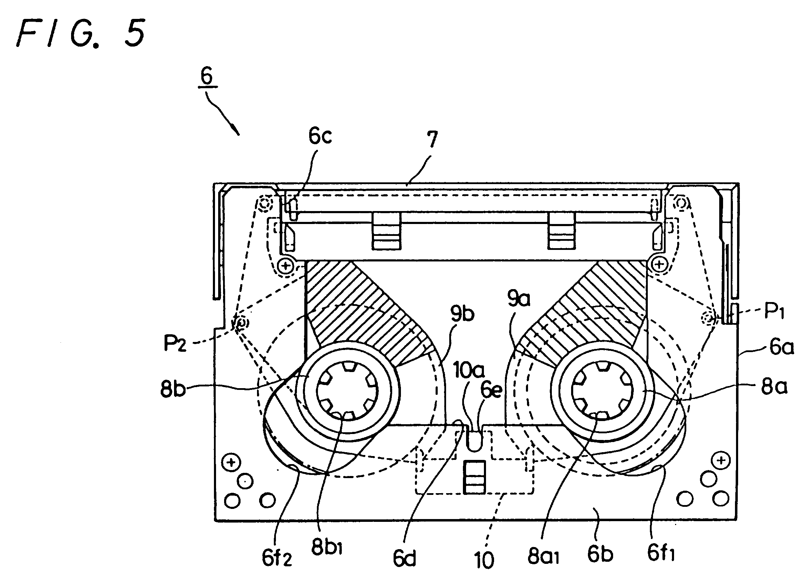

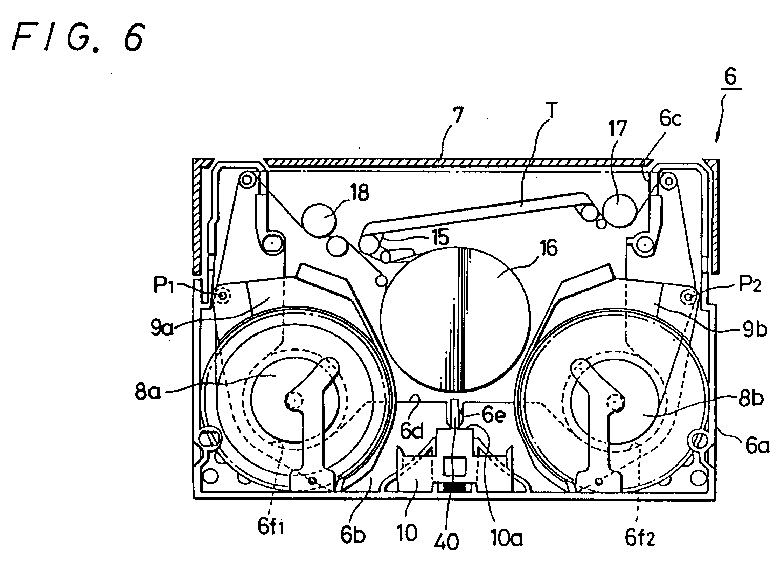

The tape cassette 6 has a supply reel 8a and a takeup reel 8b, which are housed in the cassette housing 6a, as shown in Figures 5 and 6. So that they can be used in the tape deck mechanism described above, the supply and takeup reels 8a, 8b are movable in determined directions from their predetermined at-rest positions. Specifically, as shown in Figure 5, the supply and takeup reels 8a, 8b are spaced a predetermined distance from each other and are locked in their predetermined positions during a normal, at-rest condition. When the supply and takeup reels 8a, 8b are unlocked, they are free to move in the same directions in which the reel supports 11, 12 are movable to the positions shown in Figure 6.

In the condition, shown for example in Figure 1, when the third chassis 4 is angularly moved away from first chassis 2 into coplanar alignment therewith, thus opening the first chassis 2, and also in the condition when the second chassis 3 is moved into the third chassis 4 and the cassette presser frame 5 is erected, the first chassis 2 is rendered open and the rotary head drum 16 is displaced out of first chassis 2. Under this condition, the reel supports 11, 12 in the first chassis 2 are positioned in normally spaced-apart relationship to each other, with the reel support chassis 31, 32 held against the respective stopper pins 36, 37 under the force of the springs 38, 39.

When the tape cassette 6 shown in Figure 5 is then loaded into the first chassis 2, the reels 8a, 8b in the tape cassette 6 are engaged by the respective reel supports 11, 12, and unlocked by an unlocking member 40 mounted on the first chassis 2, as shown in Figure 6.

Then the cassette presser frame is rotated downwardly to press the tape cassette 6 into the loaded position in the first cassette 2. As described above, the second link 25 is turned to cause the presser pin 28 to press the arm 7a of the lid 7, which is turned to open the front of the tape cassette 6.

After the tape cassette 6 is opened, the second chassis 3 is moved into the first chassis 2 and the rotary head drum 16 on the second chassis 3 is inserted into the tape cassette 6 through the now opened front side thereof. Upon insertion of the rotary head drum 16 into the tape cassette 6, the head drum base 33 engages and presses the reel support chassis 31, 32, thereby angularly displacing the reel supports 11, 12 away from each other against the resiliency of the springs 38, 39. Because the reels 8a, 8b in the tape cassette 6 are engaged with the reel supports 11, 12, respectively, they are also displaced away from each other in unison with the reel supports 11, 12. Accordingly, the dead space available in the tape cassette 6 is increased, so that the rotary head drum 16 can enter the increased dead space and be fully inserted into the tape cassette 6.

The third chassis 4 is then moved and folded over the first chassis 2, during which operation the second link 25 is released from the lid 7, which automatically closes the front lid 7 of the tape cassette 6. Consequently, the third chassis 4 is neatly held against the first chassis 2 in fully superposed relation, thus completely closing the upper open side of the first chassis 2. The third chassis 4 and the first chassis 2 in this combined or folded-together form are of substantially the same size and shape as the tape cassette that is loaded therein.

The second chassis 3 is moved in and out by a drive motor, not shown, mounted on the first chassis 1 and the second chassis 3 has a slot 42 in which a pin 41 is engaged and that is circumferentially movable by the drive motor, as shown in Figure 1. The slot 42 functions as a cam and includes an actuating portion 42a, along which the pin 41 slides to move the second chassis 3 when the pin 41 is driven in circular motion by the drive motor, and relief portions 42b, 42c along which the pin 41 idly moves when the tape in the tape cassette 6 is loaded around the rotary head drum 16 and also when the tape cassette 6 is unlocked for ejection.

The pinch roller 17, which is located on one side of the rotary head drum 16, is rotatably supported on a pinch roller arm 43 mounted on the second chassis 3. The tension roller 18, which is located on the other side of rotary head drum 16, is rotatably supported on the second chassis 3 by a shaft 18a. The second chassis 3 has an arcuate guide slot 44 formed therein and positioned near and extending partly around the rotary head drum 16. The tape loading mechanism 15 is movable along the arcuate guide slot 44. The second chassis 3 also has a straight transverse relief slot 47 receiving a pin 46 of a loading arm 45 on which the tape loading mechanism 15 is supported. Relatively large transverse cut-outs 48, 49 are positioned on the opposite sides, respectively, of the rotary head drum 16 to receive the shafts of the reel supports 11, 12 respectively when the second chassis 3 is moved into the first chassis 2.

As shown in Figure 1, the reel support drive mechanism 13, which is disposed in the first chassis 2 selectively to transmit drive forces to the reel supports 11, 12, comprises a support plate 51 having a central bearing 50 thereon, a pair of larger, inner gears 52, 54 rotatably mounted on the support plate 51, one on each side of the bearing 50, and a pair of smaller, outer gears 53, 55 rotatably mounted on the respective outer ends of the support plate 51 and held in mesh with the larger gears 52, 54, respectively. The outer gears 53, 55 can be selectively alternately brought into mesh with respective gears 11a, 12a of the reel supports 11, 12 when the support plate 51 is pivoted abut its central axis. Because the reel support drive mechanism 13 has the four gears 52, 53, 54, 55, it can reliably transmit drive forces to the reel supports 11, 12, even when the relatively movable reel supports 11, 12 are spaced the maximum distance from each other.

The side wall panels 2c, 2d of the first chassis 2 have respective cut-outs 2c2, 2d2 formed in upper rear edges thereof to facilitate manual insertion and removal of the tape cassette 6 into and out of the first chassis 2.

The member 40 that is used for unlocking the reels 8a, 8b in the tape cassette 6 is mounted in the first chassis 2, as shown in Figures 1 and 6, and has a substantially triangular presser element 40a that is inserted upwardly into the casette housing 6a of the tape cassette 6 as it is loaded into the first chassis 2, and thereby acts to push a lock member 10 in the cassette 6 that is used to lock the reels 8a, 8b.

The operation of the various elements mounted on the second chassis 3, such as the rotary head drum 16, the tape loading mechanism 15, and the reel supports 11, 12, is accomplished by an ordinary conventional actuator mechanism typically including a motor, speed reducer gears, and other known components, therefore, in the interest of clarity and brevity the actuator mechanism is not illustrated and need not be described herein.

The tape cassette 6 that can be loaded into the deck mechanism 1 of Figure 1 is shown in more detail in Figure 5. The cassette housing 6a of the tape cassette 6 has an open mouth 6d in a bottom panel 6b that is contiguous to a front open side 6c of the cassette housing 6a. The supply and takeup reels 8a, 8b in the cassette housing 6a are pivotably mounted by respective reel holders 9a, 9b that are disposed in the cassette housing 6a above the mouth 6d. The reel holders 9a, 9b are pivotally supported in the cassette housing 6a by respective shafts P1, P2, so that the reel holders 9a, 9b are angularly movable toward and away from each other and move generally linearly toward the rear corners of the cassette housing 6a. The supply and takeup reels 8a, 8b have respective central holes 8a1, 8b1 opening downwardly to receive respective upraised shafts of the reel supports 11, 12 when the cassette 6 is loaded onto the first chassis 2. When the tape cassette 6 is loaded onto the first chassis 2, the shafts P1, P2 about which the reel holders 9a, 9b are swingable with respect to the cassette housing 6a are axially aligned with the respective shafts 34, 35 about which the reel supports 11, 12 are angularly movable, that is, pivotable with respect to the first chassis 2.

As shown in Figures 5 and 6, the cassette housing 6a also houses the reel lock member 10 in a rear portion thereof at the end opposite the lid 7, to lock the reels 8a, 8b and the reel holders 9a, 9b in position. The lock member 10 is normally resiliently urged in a forward direction to lock the reels 8a, 8b and the reel holders 9a, 9b. At this time, a front end portion 10a of the lock member 10 is located across a cavity 6e formed at the rear edge of the mouth 6d in the bottom panel 6b.

When the tape cassette 6 is loaded into the first chassis 2 and pressed downwardly, the unlocking member 40 is inserted into the cavity 6e and the presser element 40a of the unlocking member 40 pushes the front edge 10a of the lock member 10 against the resilient forces applied thereto, thereby unlocking the reels 8a, 8b and the reel holders 9a, 9b, which are then free to pivot back into the expanded position.

The bottom panel 6b of the cassette housing 6a also has a pair of recesses 6f1, 6f2 formed therein near respective rear corners thereof and contiguous to the mouth 6d, to receive the respective reels 8a, 8b. The recesses 6f1, 6f2 extend along the respective paths of the swingable reel holders 9a, 9b of the tape deck mechanism 1 shown in Figure 1.

Figure 6 shows the tape cassette 6 with the rotary head drum 16 and the tape loading mechanism 15 inserted in the increased space made available in the cassette housing 6a. After the lid 7 is closed, the magnetic tape T in the tape cassette 6 is loaded around the rotary head drum 16 by the tape loading mechanism 15, so that the recording and reproducing heads on the rotary head drum 16 are ready to record signals on and reproduce signals from the magnetic tape T.

An improved system is provided to open and close the lid on the tape cassette, which is shown in Figures 5 and 6. Tape cassettes for use in magnetic recording and reproducing devices, particularly video tape recorders (VTRs) including 8-mm, digital audio tape recorders (DATs), or the like have lids for closing tape withdrawal openings so that the tape cassettes can easily be maintained and handled and the tapes can be protected from damage and dust. Heretofore, the tape cassette lid was opened utilizing the downward pressure of the cassette operating against the spring force used to keep the lid closed.

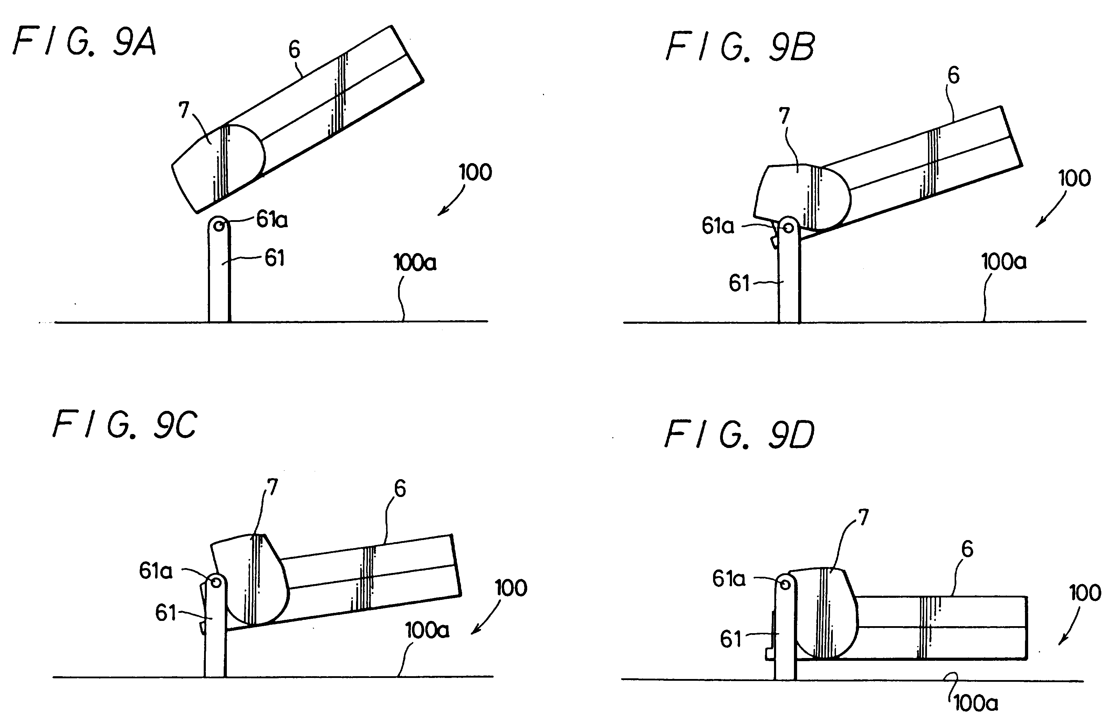

An example of such known lid opening operation is shown in Figures 9A to 9D, in which a conventional 8-mm VTR 100 has a cassette loading unit 100a including a lid raising member 61 for opening the lid 7 of a tape cassette 6 to allow the tape to be withdrawn therefrom and wrapped around a rotary head drum when the tape cassette 6 is loaded into the cassette loading unit 100a. The lid 7 is normally urged by a spring, not shown, into a closed position and the lid raising member 61 has an engaging pin 61a for opening the lid 7 when the tape cassette 6 is loaded.

To load the tape cassette into the cassette loading unit 100a, the cassette housing 6a of the tape cassette 6 is lowered while a lower edge of the closed lid 7 is being engaged by the engaging pin 61a of the lid raising member 61. Because the lid 7 is caught by the engaging pin 61a and the loading operation continues causing the cassette housing 6a to be lowered, the lid 7 is pivoted upwardly against the bias of the lid-closing springs so that the lid 7 is opened with respect to the cassette housing 6a. Consequently, after the cassette housing 6a is lowered, the tape cassette 6 remains loaded under forces that are strong enough to overcome the resiliency of the lid-closing spring, during which time signals are recorded and reproduced from the tape with the lid 7 held open.

As noted hereinabove, in VTRs in which the lid is held in the raised position under the resiliency of the lid-closing spring and the tape is withdrawn from the opening of the tape cassette, or recording and reproducing heads are inserted into the opening of the tape cassette, the tape cassette has to be held stably in the loaded position. Because the tape cassette must be held in position under retentive forces strong enough to overcome the moment resulting from the resiliency of the lid-closing spring, the cassette loading unit needs a mechanism for guiding the tape cassette into the loaded position and retaining the tape cassette reliably in the loaded position against the lid-closing spring force.

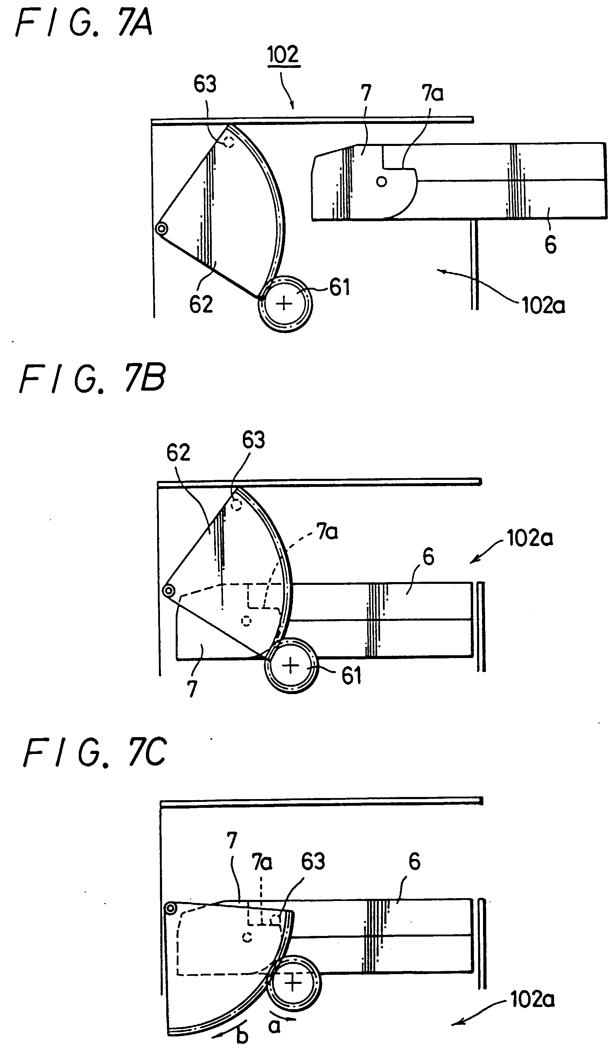

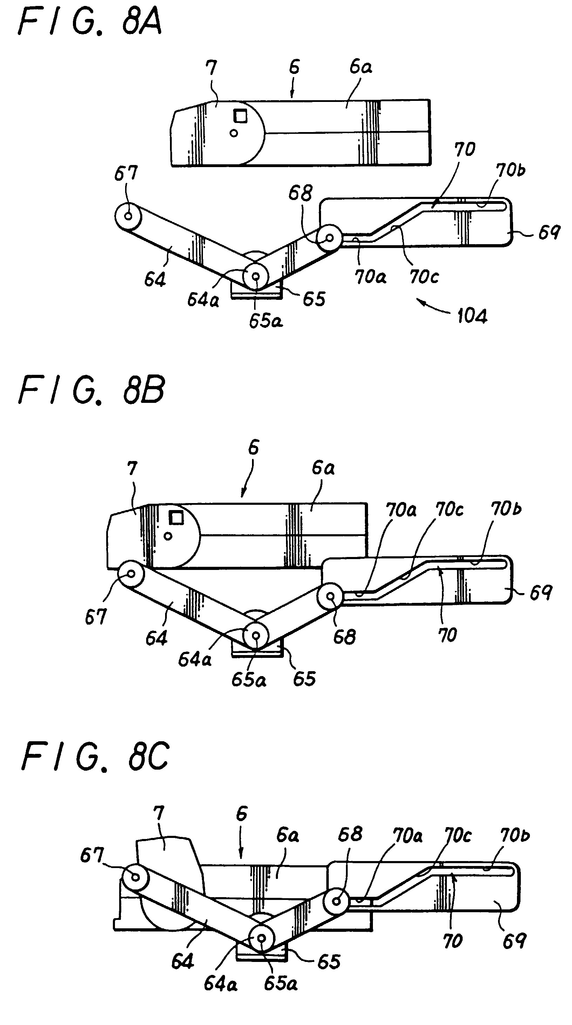

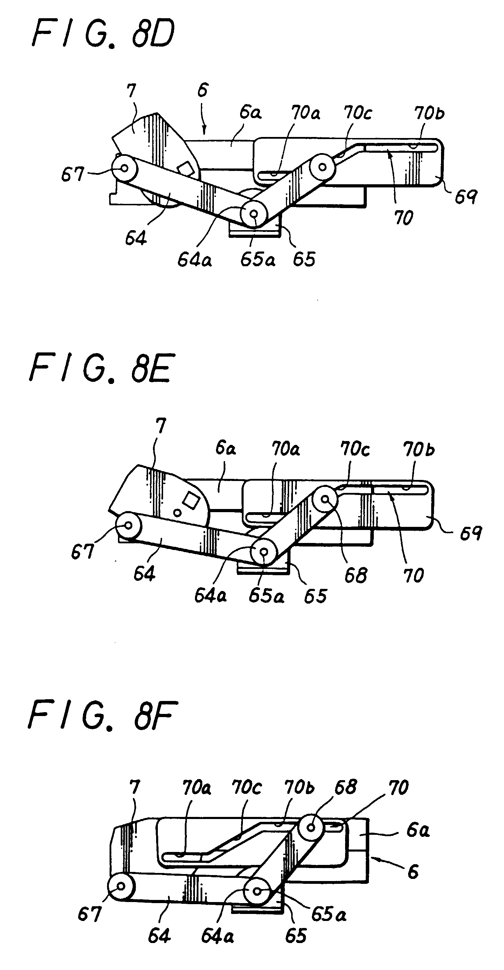

Figures 7A to 7F and 8A to 8F show alternative mechanisms for opening and closing the lid of a tape cassette.

The lid opening and closing mechanism shown in Figures 7A to 7F employs a sector gear for opening the lid of a tape cassette. More specifically, a deck mechanism 102 includes a loading unit 102a in the form of a casing for loading a tape cassette 6 therein. A sector gear 62 is rotatably mounted on a side wall panel of the loading unit 102a in a position corresponding to a side of the lid 7 of the tape cassette 6. The sector gear 62 is held in mesh with a drive gear 61 and is rotatably movable in one direction and the other, upwardly and downwardly. The sector gear 62 has mounted on an upper inner surface thereof a presser pin 63 to engage an arm 7a projecting rearwardly from the lid 7 of the tape cassette 6.

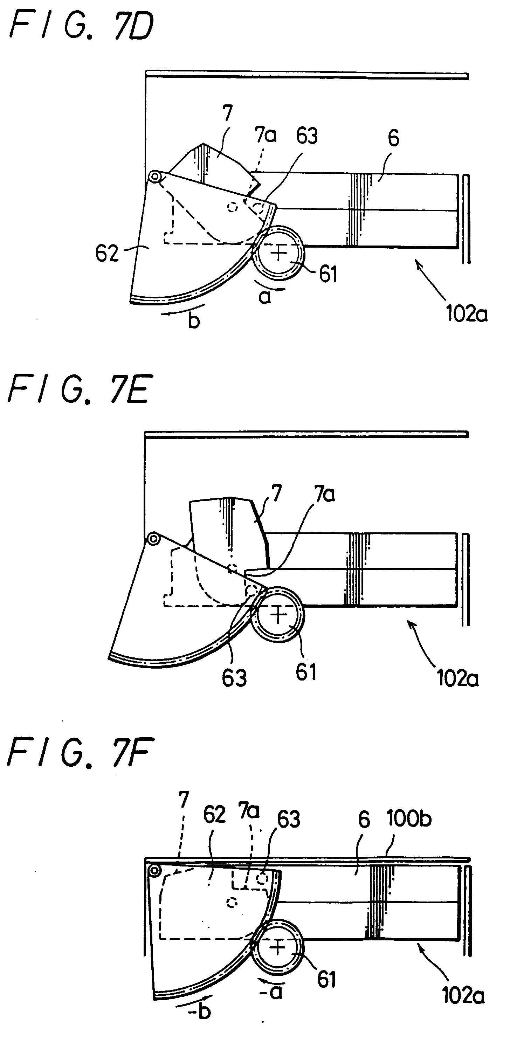

When the tape cassette 6 is inserted into the loading unit 102a, as shown in Figure 7A, and lowered into a predetermined position, as shown in Figure 7B, the drive gear 61 is rotated counterclockwise in the direction indicated by the arrow a in Figure 7C, causing the sector gear 62 meshing with the drive gear 61 to turn clockwise in the direction indicated by the arrow b. The presser pin 63 mounted on the sector gear 62 is therefore brought into abutment against the arm 7a of the lid 7 and, upon further rotation of the sector gear 62, the presser pin 63 presses the arm 7a to turn the lid 7 in an opening direction, as shown in Figure 7D. The lid 7 is fully opened when the sector gear 62 has been turned to its downward limit position, as shown in Figure 7E, at which point the drive gear 61 is stopped to stop the sector gear 62 thus holding the lid 7 in the fully opened position. The rotary head drum and the tape loading mechanism, not shown, are now inserted into the tape cassette 6, and the tape is the tape cassette 6 is loaded around the rotary head drum by the tape loading mechanism.

After the rotary head drum and the tape loading mechanism are completely inserted into the tape cassette 6, the drive gear 61 is rotated clockwise in the opposite direction indicated by the arrow -a in Figure 7F, thereby turning the sector gear 62 counterclockwise in the direction indicated by the arrow -b, with the result that the lid 7 follows the presser pin 63. The released lid 7 is automatically turned to close the front open side of the tape cassette 6 by the force of its own biasing spring. After the lid 7 is closed the drive gear 61 is stopped to stop the sector gear 62 in a substantially intermediate angular position, whereupon the upper edge of the sector gear 62 lies substantially flush with the upper surface of the tape cassette 6, as shown in Figure 7F, and the presser pin 63 is out of contact with the arm 7a of the lid 7. An appropriate upper panel 100b of the loading unit 100a is then lowered toward the upper surface of tape cassette 6, and the loading unit 100a is rendered compact in size.

Another mechanism for opening and closing the lid of a tape cassette is shown in Figures 8A to 8F, in which a slide cam mechanism is provided. As shown in Figures 8A to 8F, a loading unit 104 to load a tape cassette 6 supports on a side wall panel thereof a substantially V-shaped lever arm 64 that is pivotally mounted on a bearing 65 by a shaft 65a at an intermediate location 64a along the lever arm 64. The lever arm 64 has a lid opening pin 67 on a front end thereof and engagement pin 68 on a rear end thereof.

A slide cam 69, which is slidable towards and away from the arm 64, is disposed behind the lever arm 64 and has a cam groove 70 defined therein, with the engagement pin 68 slidably riding in the cam groove 70. The cam groove 70 includes a front lower horizontal portion 70a, a rear upper horizontal portion 70b, and an intermediate slanted portion 70c interconnecting the front and rear cam groove portion 70a, and 70b. When the slide cam 69 is moved back and forth, the lever arm 64 is pivoted about the shaft 65a by the engaging pin 68 moving vertically as it slides along and up the cam groove 70.

When the tape cassette 6 is inserted into the loading unit 104, as shown in Figure 8A, and lowered toward a predetermined position a front lower edge of the lid 7 of the tape cassette 6 is engaged by the lid opening pin 67 and the front end of the lever arm 64. At this time, the engaging pin 68 on the rear end of the arm 64 engages in the front lower horizontal portion 70a of the cam groove 70, thereby holding the lever arm 64 against angular movement about the shaft 65a, as shown in Figure 8B.

When the tape cassette 6 is further lowered, the lid 7 is pressed against the lid opening pine 67 on the end of the lever arm 64, which is held non-rotatable by the pin 68 and the cam groove portion 70a. Therefore, the lid 7 is pushed upwardly in an opening direction, as shown in Figure 8C. After the front side of the cassette housing 6a of the tape cassette 6 is made accessible by the opening lid 7, the rotary head drum and the tape loading mechanism, not shown, are inserted into the tape cassette 6, and the tape is loaded round the rotary head drum by the tape loading mechanism.

After the rotary head drum and the the loading mechanism are completely inserted into the tape cassette 6 and the tape is fully loaded around the rotary head drum, the slide cam 69 is moved forward and the engaging in 68 slides along the cam groove 70 from the front lower horizontal portion 70a onto the intermediate slanted portion 70c, as shown in Figure 8D. The lever arm 64 is then rotated counterclockwise about the shaft 65a, thereby lowering the lid opening pin 67, which permits the lid 7 to start moving downwardly and closing the cassette housing 6a, as shown in Figure 8E.

Further forward movement, towards the left as viewed in Figure 8E, of the slide cam 69 brings the engaging pin 68 into the rear upper horizontal portion 70b of the cam groove 70, and the lever arm 64 is further turned counterclockwise about the pin 65a to lower the lid opening pin 67. The lid 7 is further lowered until it fully closes the cassette housing 6a of the tape cassette 6, at which time the lever arm 64 is locked against any further rotation about the pivot shaft 65a by means of the pin 68 in the cam groove portion 70b. Now, signals can be recorded on and reproduced from the tape in the tape cassette 6 by the recording and reproducing heads of the rotary head drum inserted in the tape cassette 6.

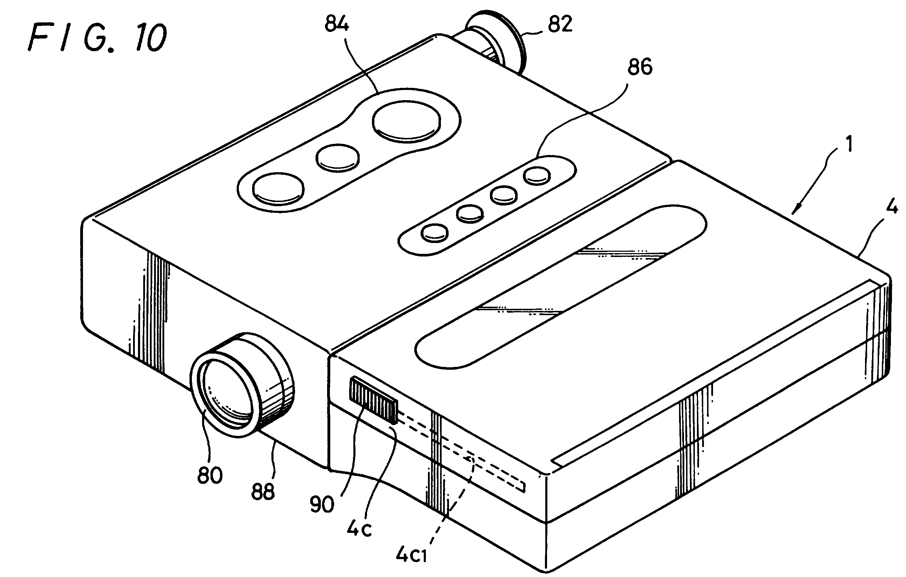

Figure 10 shows a complete video camera assembly employing the deck mechanism described above. The overall electronics and optics of such a camera can be generally the same as those of known 8-mm video cameras, which also all include a lens 80, a view finder 82, and operator controls, shown generally at 84 and 86. In this embodiment, the deck assembly 1 is arranged with its longer side dimension against a corresponding side dimension of a camera body 88.

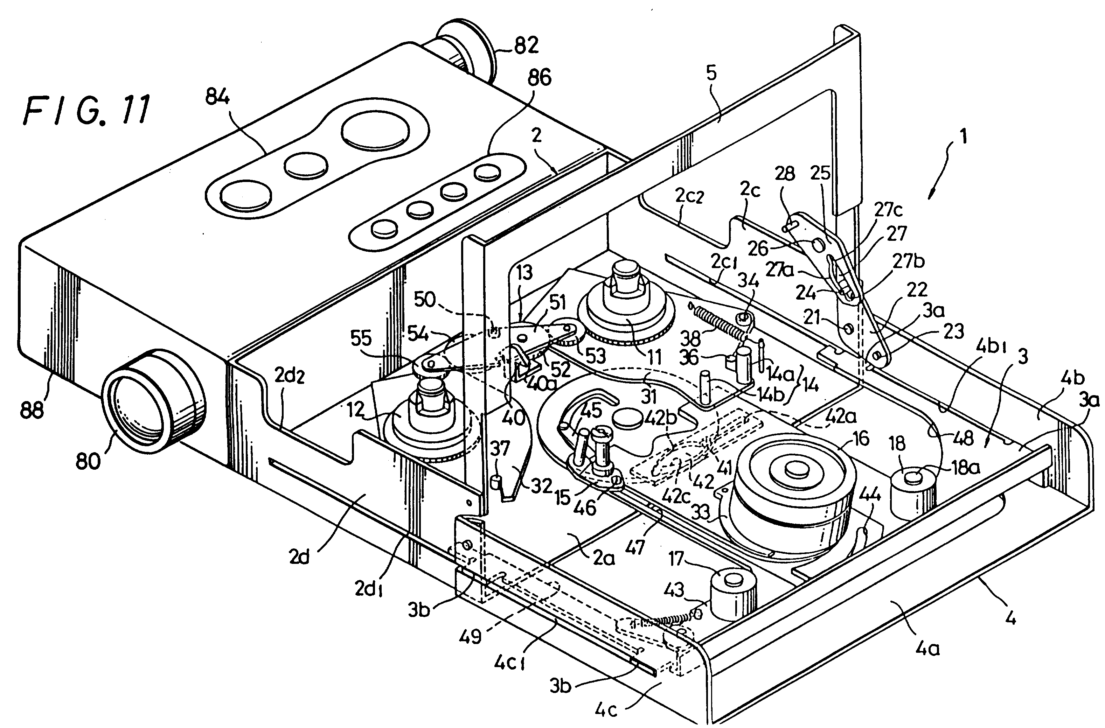

As was shown in Figure 2, the third chassis 4 of the deck assembly 1 overlies the other elements of the deck mechanism in the closed position. Thus, correspondence is seen between Figure 3 and Figure 10, in which the upper panel 4a forms a top surface and the side wall panels 4b and 4c form the sides. It is understood, of course, that in a complete camera assembly decorative coverings and finishes are applied so that the surfaces of the panels 4a, 4b, 4c for example, are not actually exposed or visible in the closed position. The guide slot 4c1 as shown in Figure 1 is shown in dotted lines in Figure 10. A slide catch 90 or the like is provided to open the deck mechanism for tape loading or removal, and Figure 11 is a perspective view showing such an opened condition.

As shown in Figure 11, the deck mechanism 1 in the open position has the third chassis 4 pivoted away from the first chassis 2 and the second chassis 3 is in the withdrawn position. The presser frame 5 is also in the raised position. In this position the deck mechanism is now ready to receive a tape cassette, not shown, for loading. Thus, it is seen that by arranging the deck mechanism 1, which can be constructed having a size in plan generally the same as an 8-mm tape cassette, with its longer side against a camera assembly, which is also generally the same size in plan as an 8-mm tape cassette, that a compact and portable 8-mm video camera structure can be achieved. Such small size camera could not heretofore be achieved because of the requirement to make the deck assembly large enough to accommodate the cassette plus at least part of the head drum assembly outside of such cassette. The embodiment of Figure 11 is possible because the head drum assembly is inserted fully into the cassette body and the tape lid is then closed.

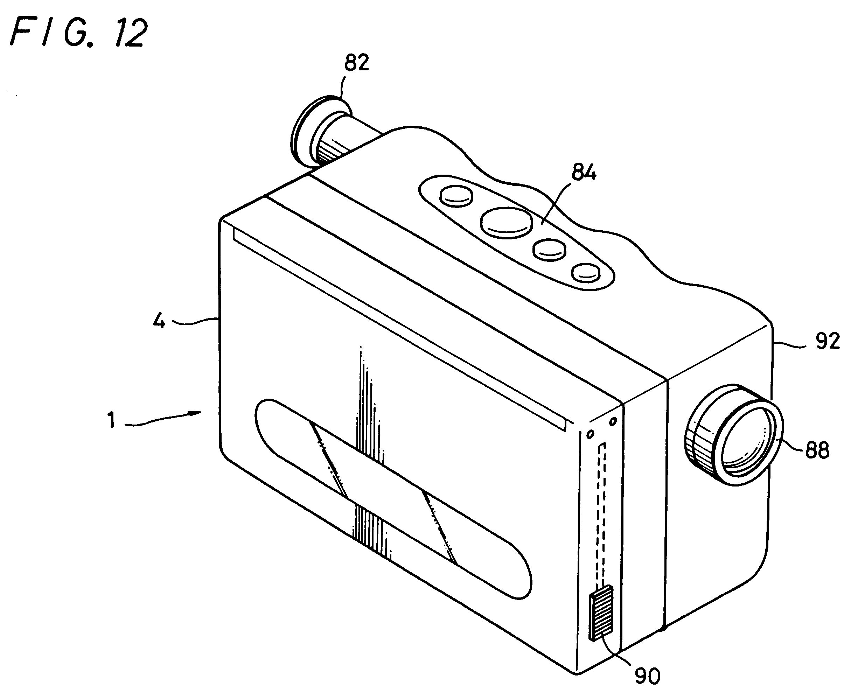

Figure 12 shows another embodiment of a complete video camera assembly also employing the deck mechanism described above. The overall camera components and electronics employed in the embodiment of Figures 10 and 11 are likewise employed here but are rearranged to form a more square or brick-shaped structure, in place of the flat construction of the embodiment shown in Figures 10 and 11. In the embodiment of Figure 12, the deck mechanism 1 is arranged with its large flat bottom surface adjacent a flat side wall of the camera body 92. This provides a more square construction and a different aspect ratio than the flat embodiment of Figure 10. The slide catch 90 is provided to open the deck mechanism to permit tape loading and unloading.

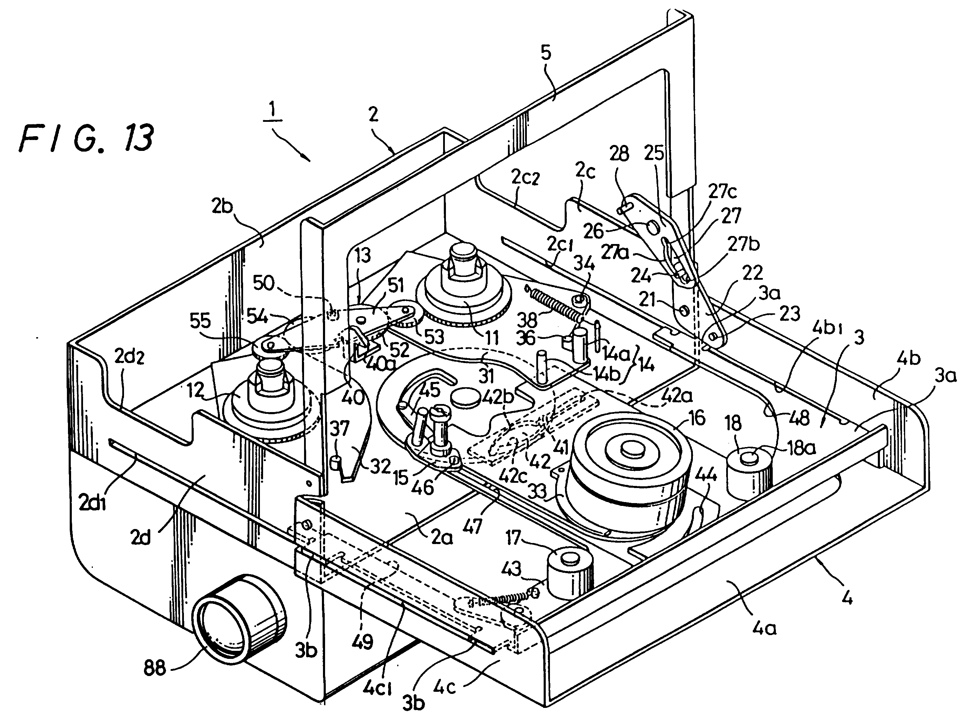

In Figure 13, the deck mechanism 1 is shown in the opened position with the third chassis 4 pivoted up and away from the first chassis 2 and into coplanar alignment therewith. As explained hereinabove, once the third chassis 4 is coplanar with the first chassis 2 then the second chassis 3 can be withdrawn back into the second chassis 4. The presser frame 5 is shown in the upraised position and in this position the deck mechanism 1 is ready to receive a tape cassette, not shown. Once such a cassette is inserted, the presser frame 5 is closed, a motor, not shown, is actuated to drive the second chassis 3 with the head drum 16 and the like into the expanded open space in the tape cassette with movable reels, the cassette lid is closed, and the third chassis 4 is pivoted to be closed over the cassette, the presser frame 5, and the first chassis 2. At this point the video camera is ready to record or reproduce image signals.

As noted above, the deck mechanism is roughly the same size as an 8-mm video cassette. Therefore, the overall video camera assembly can be provided having a size based on those guidelines. For example, in the embodiment shown in Figure 10 the following dimensions are achieved: overall width across the front where the lens is located - 147mm; overall depth - 100mm; thickness at the side where the optics are located - 47mm; and thickness at the side corresponding to the deck mechanism - 37mm. On the other hand, exemplary dimensions for the embodiment shown in Figure 12 can be achieved as follows: overall width across the front - 65mm; overall height - 67mm; and overall depth along the deck mechanism side - 100mm.

It will be quickly appreciated from the above dimensions that a video camera constructed with the deck mechanism described above can be very handy and compact.

The cassette reels having the tape wound therearound are movable to increase the dead space in the tape cassette into which the recording and reproducing heads on the rotary head drum are inserted, the reel supports of the deck are moved by the mechanism that moves the recording and reproducing heads with respect to the tape cassette loaded in the deck mechanism and because the cassette tape reels are mounted on the reel supports they are moved as well. Therefore, the number of drive sources required is reduced. The deck mechanism may be of a low profile since at least the structure for moving the reel supports in response to movement of the recording and reproducing heads may be of a thickness smaller than the height of the mechanism that moves the recording and reproducing heads with respect to the loaded tape cassette.

Since the reel supports can be moved by a simple arrangement, the number and cost of components used can be reduced, and the procedure for adjusting the assembled components is simplified.

When a tape cassette having a lid for opening and closing an opening intended for insertion of a rotary head drum and a tape loading mechanism, is loaded into a loading unit of a VTR or a DAT, the lid is opened to allow the rotary head drum and the tape loading mechanism to be fully inserted into the tape cassette. After the rotary head drum and the tape loading mechanism are inserted into the tape cassette, the lid is closed again, and signals are recorded and/or reproduced by the rotary head drum inserted in the tape cassette with the lid closed. During the signal recording and reproducing process, the tape cassette remains closed by the lid. Therefore, any means for urging the tape cassette to be retained in a desired position is simplified. Furthermore, because the lid does not project above the flat configuration of the tape cassette during the signal recording or reproducing process, the deck mechanism of the magnetic recording and reproducing device may have maximum dimensions that are substantially the same as those of the tape cassette, and hence may be of a low profile and a small size.

## Claims

1. A cassette loading arrangement for loading a cassette into a recording/reproducing apparatus, comprising:
a tape cassette (6) having tape take-up and supply reels (8a,8b);
a first chassis (2) on which a pair of reel drive spindles (11, 12) are slidably mounted to receive the take-up and supply reels (8a, 8b) of the tape cassette (6) loaded thereon;
a second chassis (3) having a recording/reproducing head (16) mounted thereon, the second chassis (3) being slidably mounted on the first chassis (2); and
chassis guide means (3a, 3b, 4b, 4c) to provide relative motion between the first chassis (2) and the second chassis (3);
characterised in that the tape take-up and supply reels (8a,8b) are arranged in the tape cassette for movement so as to increase a dead space at a front of the tape cassette; and the chassis guide means provide selective movement of the recording/reproducing head (16) on the second chassis (3) into the increased dead space in the tape cassette (6) and provide movement of the pair of reel drive spindles (11, 12) away from the recording/reproducing head (16), thereby moving the take-up and supply reels (8a, 8b).

2. A cassette loading arrangement according to claim 1, wherein the pair of reel drive spindles (11, 12) are mounted on respective ones of a pair of reel support chassis (31, 32) pivotally attached to the first chassis (2), and bias means (38, 39) bias the pair of reel support chassis (31, 32) to a first position.

3. A cassette loading arrangement according to claim 2, wherein the recording/reproducing head (16) is mounted on a head drum base (33) mounted on the second chassis and arranged to contact the pair of reel support chassis (31, 32) as the recording/reproducing head is moved into the dead space and move the pair of reel support chassis (31, 32) against the force of the biasing means (38, 39).

4. A cassette loading arrangement according to claim 1, in which the cassette (6) has a movable lid (7) at a front side thereof covering the tape, and further comprising lid moving means to move the lid during a cassette loading operation.

5. A cassette loading arrangement according to claim 4, further comprising tape loading means (17, 18) to guide the tape into contact with the recording/reproducing head (16).

6. A cassette loading arrangement according to claim 5, in which the lid moving means includes means to open the lid (7) of the cassette (6) during loading thereof and to close the lid of the cassette after the tape is guided into contact with the recording/reproducing head (16).

7. A cassette loading arrangement according to claim 1, in which the tape cassette (6) includes a pair of reel supports (9a, 9b) having the take-up and supply reels (8a, 8b) mounted respectively thereon and pivot means (P1, P2) pivotally mounting the reel supports (9a, 9b) to a body of the tape cassette, whereby the take-up and supply reels (8a, 8b) are movable to increase the dead space at the front of the tape cassette.

8. A cassette loading arrangement according to claim 7, further comprising reel support lock means (10) mounted on the body of the tape cassette to lock the reel supports (9a, 9b) against pivoting motion about the pivot means (P1, P2).

9. A cassette loading arrangement according to claim 8, further comprising an unlocking member (40) mounted on the first chassis (2) to unlock the reel support locking means (10) and permit pivoting movement of the reel supports (9a, 9b).

## Patentansprüche

1. Kassettenladevorrichtung zum Laden einer Kassette in ein Aufnahme-/ Wiedergabegerät, bestehend aus
- einer Bandkassette (6) mit Bandaufwickel- und -abwickelspulen (8a, 8b),
- einem ersten Gestell (2), an dem zwei Spulenantriebswellen (11, 12) verschiebbar anqebracht sind, um die Bandaufwickelund -abwickelspulen (8a, 8b) der darin geladenen Bandkassette (6) aufzunehmen,
- einem zweiten Gestell (3) mit einem daran angebrachten Aufnahme-/ Wiedergabekopf (16), wobei das zweite Gestell (3) verschiebbar an dem ersten Gestell (2) angebracht ist, und
- Gestell-Führungsmitteln (3a, 3b, 4b, 4c), die die relative Bewegung des ersten Gestells (2) und des zweiten Gestells (3) zueinander gewährleisten,
dadurch gekennzeichnet,
daß die Bandaufwickel- und -abwickelspulen (8a, 8b) in der Bandkassette beweglich dergestalt angeordnet sind, daß ein toter Raum an der Vorderseite der Bandkassette vergrößert wird; und daß die Gestell-Führungsmittel eine wahlweise Verschiebung des Aufnahme-/ Wiedergabekopfs (16) an dem zweiten Gestell (3) in den vergrößerten toten Raum in der Bandkassette (6) hinein gewährleisten und die Bewegung der zwei Spulenantriebswellen (11, 12) weg von dem Aufnahme-/ Wiedergabekopf (16) gewährleisten, wobei dadurch die Bandaufwickel- und -abwickelspulen (8a, 8b) verschoben werden.

2. Kassettenladevorrichtung nach Anspruch 1, wobei die zwei Spulenantriebswellen (11, 12) auf zwei entsprechenden Spulenhalterungen (31, 32) sitzen, die schwenkbar an dem ersten Gestell (2) angebracht sind, und Spannmittel (38, 39) die zwei Spulenhalterungen (31, 32) in einer ersten Stellung halten.

3. Kassettenladevorrichtung nach Anspruch 2, wobei der Aufnahme-/ Wiedergabekopf (16) auf einer Kopfwalzenbasis (33) sitzt, die auf dem zweiten Gestell angebracht und so angeordnet ist, daß sie mit den zwei Spulenhalterungen (31, 32) in Kontakt kommt, sobald der Aufnahme-/ Wiedergabekopf in den toten Raum eingeführt wird und die zwei Spulenhalterungen (31, 32) gegen die Kraft der Spannmittel (38, 39) verschoben werden.

4. Rassettenladevorrichtung nach Anspruch 1, wobei die Kassette (6) an ihrer Vorderseite eine bewegliche Klappe (7) aufweist, die das Band verdeckt, und des weiteren Klappenbetätigungsmittel aufweist, die die Klappe während eines Kassettenladevorgangs verschieben.

5. Kassettenladevorrichtung nach Anspruch 4, die ferner Bandlademittel (17, 18) aufweist, die das Band in Kontakt mit dem Aufnahme-/ Wiedergabekopf (16) bringen.

6. Kassettenladevorrichtung nach Anspruch 5, wobei das Klappenbetätigungsmittel Mittel zum Öffnen der Klappe (7) der Kassette (6) während deren Ladens sowie zum Schließen der Kassettenklappe, nachdem das Band in Kontakt mit dem Aufnahme-/ Wiedergabekopf (16) gebracht wurde, umfaßt.

7. Kassettenladevorrichtung nach Anspruch 1, wobei die Bandkassette (6) ein Paar Spulenträger (9a, 9b) mit daran angebrachten Bandaufwickel- und -abwickelspulen (8a, 8b) aufweist, sowie Schwenkmittel (P1, P2) aufweist, die die Spulenträger (9a, 9b) zu dem Körper der Bandkassette schwenken, wodurch die Bandaufwickel- und -abwickelspulen (8a, 8b) dergestalt bewegt werden können, daß sie den toten Raum an der Vorderseite der Bandkassette vergrößern.

8. Kassettenladevorrichtung nach Anspruch 7, die ferner Verriegelungsmittel (10) für die Spulenträger umfaßt, die an dem Körper der Bandkassette angebracht sind und die Spulenträaer (9a, 9b) gegen die Schwenkbewegung um die Schwenkmittel (P1, P2) herum verriegeln.

9. Kassettenladevorrichtung nach Anspruch 8, die ferner ein Entriegelungsglied (40) umfaßt, das an dem ersten Gestell (2) angebracht ist und die Verriegelungsmittel (10) der Spulenträger entriegelt und die Schwenkbewegung der Spulenträger (9a, 9b) ermöglicht.

## Revendications

1. Dispositif de chargement de cassette pour charger une cassette dans un appareil d'enregistrement/reproduction, comprenant :
- une cassette à bande (6) possédant des bobines de réception et d'alimentation de bande (8a, 8b);
- un premier châssis (2) sur lequel sont montées en coulissement une paire de broches d'entraînement de bobines (11, 12) pour recevoir les bobines de réception et d'alimentation (8a, 8b) de la cassette à bande (6) chargée sur celui-ci ;
- un second châssis (3) sur lequel est montée une tête d'enregistrement/reproduction (16), le second châssis (3) étant monté en coulissement sur le premier châssis (2) ; et
- des moyens de guidage de châssis (3a, 3b, 4b, 4c) pour assurer un mouvement relatif entre le premier châssis (2) et le second châssis (3);
caractérisé en ce que les bobines d'alimentation et de réception de bande (8a, 8b) sont agencées dans la cassette à bande de façon à se déplacer afin d'augmenter un espace mort au niveau d'une partie frontale de la cassette à bande ; et en ce que les moyens de guidage de châssis assurent un mouvement sélectif de la tête d'enregistrement/reproduction (16) sur le second châssis (3) jusque dans l'espace mort augmenté dans la cassette à bande (6) et assurent un mouvement de la paire de broches d'entraînement de bobines (11, 12) en éloignement de la tête d'enregistrement/reproduction (16) en déplaçant grâce à ceci les bobines de réception et d'alimentation (8a, 8b).

2. Dispositif de chargement de cassette selon la revendication 1, dans lequel la paire de broches d'entraînement de bobines (11, 12) sont montées sur des châssis de support de bobines respectifs d'une paire de châssis de support (31, 32) attachés en pivotement sur le premier châssis (2), et des moyens de sollicitation (38, 39) qui sollicitent la paire de châssis de support de bobines (31, 32) vers une première position.

3. Dispositif de chargement de cassette selon la revendication 2, dans lequel la tête d'enregistrement/reproduction (16) est montée sur une base de tambour à têtes (33) montée sur le second châssis et agencée pour venir en contact contre la paire de châssis de support de bobines (31, 32) lorsque la tête d'enregistrement/reproduction est déplacée dans l'espace mort et pour déplacer la paire de châssis de support de bobines (31, 32) à l'encontre de la force des moyens de sollicitation (38, 39).

4. Dispositif de chargement de cassette selon la revendication 1, dans lequel la cassette (6) comporte un couvercle mobile (7) sur son côté avant, qui couvre la bande, et comprenant en outre des moyens de déplacement de couvercle pour déplacer le couvercle pendant une opération de chargement de cassette.

5. Dispositif de chargement de cassette selon la revendication 4, comprenant des moyens de chargement de bande (17, 18) pour guider la bande en contact avec la tête d'enregistrement/reproduction (16).

6. Dispositif de chargement de cassette selon la revendication 5, dans lequel les moyens de déplacement de couvercle incluent des moyens pour ouvrir le couvercle (7) de la cassette (6) pendant le chargement de celle-ci et pour fermer le couvercle de la cassette après que la bande ait été guidée en contact avec la tête d'enregistrement/reproduction (16).

7. Dispositif de chargement de cassette selon la revendication 1, dans lequel la cassette à bande (6) inclut une paire de supports de bobines (9a, 9b) sur lesquels sont montés respectivement les bobines de réception et d'alimentation (8a, 8b), et des moyens formant pivot (P1, P2) qui montent les supports de bobines (9a, 9b) en pivotement sur un corps de la cassette à bande, grâce à quoi les bobines d'alimentation et de réception (8a, 8b) sont mobiles pour augmenter l'espace mort à la partie frontale de la cassette à bande.

8. Dispositif de chargement de cassette selon la revendication 7, comprenant en outre des moyens de blocage des supports de bobines (10) montés sur le corps de la cassette à bande pour bloquer les supports de bobines (9a, 9b) à l'encontre d'un mouvement de pivotement autour des moyens formant pivot (P1, P2).

9. Dispositif de chargement de cassette selon la revendication 8, comprenant en outre un élément de déblocage (40) monté sur le premier châssis (2) pour débloquer les moyens de blocage des supports de bobines (10) et permettre le mouvement de pivotement des supports de bobines (9a, 9b).
